# EUROPÄISCHE PATENTSCHRIFT

(11) **EP 1 055 829 B1**
(45) Veröffentlichungstag und Bekanntmachung des Hinweises auf die Patenterteilung: **17.01.2007**
(21) Anmeldenummer: 00108208.0
(22) Anmeldetag: 14.04.2000
(51) Int. Cl.: F16B 41/00, F16B 5/02

(54) **Schraube mit Hülse**
Screw with sleeve
Vis avec douille

(30) Priorität: 28.05.1999 DE 19924502
(43) Veröffentlichungstag der Anmeldung: 29.11.2000
(73) Patentinhaber: Elring Klinger AG, 72581 Dettingen (DE)
(72) Erfinder: Amann, Erich, 72108 Rottenburg (DE); Baron, Ralf, 72555 Metzingen (DE)
(74) Vertreter: Bartels & Partner

(56) Entgegenhaltungen:
- WO-A-95/21335
- DE-A- 2 834 432
- DE-A- 19 510 349
- DE-A- 19 523 932
- DE-A- 19 534 034
- DE-A- 19 724 935
- DE-C- 19 750 658
- DE-U- 1 878 229
- US-A- 4 585 366

## Beschreibung

Im Maschinenbau kommt es häufig vor, dass Schrauben im Zuge eines hohen Vorfertigungsgrades durch Hülsen hindurchgesteckt und dann der Fertigung bereitgestellt werden. Zu diesem Zweck ist es besonders wichtig, dass die Hülse mit der Schraube unverlierbar verbunden ist. Um die Schraube mit der Hülse unverlierbar zu verbinden, versieht man seither die Schraube am Schaft mit einem umlaufenden, radial nach außen stehenden Wulst. Desweiteren besitzen die Hülsen nach dem Stand der Technik innen eine Engstelle, sodass die Hülse aufgrund ihrer Engstelle und dem umlaufenden Wulst der Schraube nicht von der Schraube abgestreift werden kann. Nachteilig bei dieser Lösung ist jedoch, dass die verwendeten Schrauben keine Standard-Schrauben, sondern Sonderanfertigungen sind, wodurch sich höhere Kosten ergeben. Außerdem entsteht im Bereich des umlaufenden Wulstes eine Kerbwirkung, sodass die Schraube an der Stelle des Wulstes eine Schwachstelle aufweist.

Die DE 197 50 658 C1 zeigt eine Schraube mit Hülse, wobei die Hülse die Engstelle durch einen an ihrem dem Kopf zugewandten Ende auf der Innenseite vorgesehenen Gewindegang bildet. Dieser Gewindegang wird durch Kaltverformung mittels eines an der Schraube ausgebildeten Elements funktionsuntüchtig gemacht, sodass ein Herausschrauben der Schraube unmöglich ist.

Die DE 195 23 932 A1 zeigt eine Verliersicherung für eine Schraube, die im Wesentlichen hutförmig ausgebildet ist, wobei der achsensenkrecht umlaufende Flansch nach Art einer Unterlegscheibe auf der kopfseitigen Bauteilseite anliegt.

Die DE 197 24 935 A1 zeigt eine Schraube mit Hülse, wobei die Hülse an einem stirnseitigen Ende eine flanschartige Auskragung nach außen aufweist und am gegenüberliegenden stirnseitigen Ende einen nach innen sich erstreckenden Ringkragen.

Die DE 1 878 229 U zeigt eine Verliersicherung von Schrauben, wobei die Verliersicherung nicht durch eine Hülse bereitgestellt wird, sondern entsprechende, die Schraube sichernde Vorsprünge direkt beispielsweise in den mit der Schraube zu befestigenden Gehäusedeckel eingebracht sind.

Auch die DE 195 10 349 A1 zeigt eine Schraube mit Hülse, die an ihren beiden stirnseitigen Enden jeweils eine flanschartige Auskragung nach außen aufweist.

Die WO 95/21335 A1 zeigt eine Schraube mit einer Hülse als Verliersicherung, wobei die Hülse aus einem Blech so gebogen ist, dass die einander zugeordneten Kanten aneinanderstoßen oder sogar miteinander verzahnt sind. Eine Verankerung der Hülse erfolgt durch warzenartige Formschlussvorsprünge auf der Außenseite der Hülse.

Die DE 28 34 432 A zeigt eine Vorrichtung zur Schnellbefestigung eines Organs an einem Träger, wobei das zu befestigende Organ eine Muffe und der Träger einen Zapfen aufweist, und wobei ferner die Muffe einen ihre Höhlung schneidenden Querschacht zur Aufnahme einer federelastischen Spange besitzt, welche im Zustand der Steckverbindung einen Kopf des Zapfens sperrend hintergreift.

Die DE 195 34 034 A1 zeigt eine Befestigungsvorrichtung mit einer Schraube, wobei die Schraube an der Befestigungsvorrichtung durch in die Hülse eingesetzte Halteelemente aus einem weichelastisch verformbaren Material wie beispielsweise Silikon unverlierbar gehalten ist. Außerdem zeigt dieses Dokument eine konische Verjüngung der beiden stirnseitigen Enden der Hülse.

Aus der nächstkommenden US 4,585,366 ist eine Verbindungseinrichtung mit einer Hülse bekannt, in welche die Schraube einsteckbar ist. Die Hülse weist an ihren beiden stirnseitigen Enden jeweils eine flanschartige Auskragung auf, durch welche die Hülse in einer Öffnung eines Ansatzes eines elastisch verformbaren Grundkörpers fixierbar ist.

Der Erfindung liegt die Aufgabe zugrunde, eine Schraube mit Hülse bereitzustellen, welche die Nachteile des Standes der Technik überwindet, insbesondere kostengünstig herstellbar ist und eine einfache Montage sowie zuverlässige Verbindung gewährleistet.

Das Problem ist durch die im Anspruch 1 bestimmte Schraube mit Hülse gelöst.

Durch die Verwendung von Standard-Schrauben mit einem kleineren Schaftdurchmesser als dem Außendurchmesser des Gewindebereichs weist die Schraube von vorn herein am Übergang vom Schaft zum Gewinde eine Verdickung auf, die einen Anschlag für die Engstelle der Hülse bildet. Durch die Verwendung von Standard-Schrauben wird die Verliersicherung der Hülse jedoch wesentlich kostengünstiger als bisher erzielt, da jetzt auf sonderangefertigte Schrauben verzichtet wird.

Aus Gründen der einfachen Herstellbarkeit ist die Engstelle von mindestens einem radial nach innen ragenden und von außen eingeprägten Vorsprung gebildet.

Ebenfalls günstig in der Herstellung ist es, wenn der Vorsprung ein umlaufender Wulst ist.

Der mindestens eine Vorsprung kann aber auch von den nach innen vorstehenden Rändern einer Durchstoßung des Hülsenmantels gebildet sein. Diese nach innen vorstehenden Ränder weisen federelastische Eigenschaften auf, sodass die Ränder ein Durchschieben der Schraube durch die Hülse ermöglichen. Ein Herausrutschen aus der Hülse ist jedoch unmöglich, da die nach innen vorstehenden Ränder wie ein Widerhaken wirken.

In den Hülsenmantel können auch Löcher eingebracht sein, in die Vorsprünge eines Federelements von außen einschnappbar sind, um die Engstelle zu bilden.

Vorteilhaft in der Herstellung ist es auch, wenn die Engstelle von einem Ringelement gebildet ist, das an einem Anschlag an der Hülseninnenseite anliegt.

Eine mit der Hülse verbundene, in der Schraube unverlierbar gehaltene Unterlagscheibe kann die Engstelle ebenfalls bilden. Somit erfüllt die Unterlagscheibe zum einen die Funktion, die Schraube gegen ein unerwünschtes Lösen zu sichern, und desweiteren, wenn der Innendurchmesser der Unterlagscheibe geringer ist als der Gewindeaußendurchmesser, ein Abstreifen der Hülse von der Schraube zu verhindern. Bei dieser Lösung können handelsübliche Schrauben mit unverlierbarer Unterlagscheibe verwendet werden und die Hülse an die Unterlagscheibe beispielsweise angeschweißt, angelötet oder angeklebt werden

Die Hülse ist geschlitzt und die Unterlagscheibe kann geschlitzt sein. Somit kann sich die Hülse und ggf. die Unterlagscheibe beim Überstreifen der durch die Unterlagscheibe gebildeten Engstelle über das Schraubengewinde aufweiten und nachdem die Engstelle vollständig über das Schraubengewinde geschoben ist, wieder zurückschnappen.

Aus Gründen einer kostengünstigen Fertigung bei großen Stückzahlen kann die Hülse aus einem Blechstanzling gewickelt sein. Aber auch eine Herstellung als Tiefzieh- oder Drehteil ist möglich. Allerdings sind durch Wickeln längere Hülsen herstellbar als durch Tiefziehen.

Nach Abwägung der Herstellkosten und der geforderten Festigkeit kann die Hülse beispielsweise aus Metall, Kunststoff oder aus Gummi gefertigt werden.

Nachfolgend wird ein Ausführungsbeispiel einer Schraube mit Hülse anhand der beiliegenden Zeichnung näher erläutert wobei die Hülse erfindungsgemäß geschlitzt ist, was aus den Figuren nicht entnehmbar ist.

Im Einzelnen zeigen:
- Fig. 1a: eine Seitenansicht eines ersten Ausführungsbeispiels einer Schraube mit Hülse;
- Fig. 1b: eine Ansicht der Hülse aus Fig. 1a von unten;
- Fig. 2a: eine Seitenansicht eines zweiten Ausführungsbeispiels einer Schraube mit Hülse;
- Fig. 2b: eine Ansicht der Hülse aus Fig. 2a von unten;
- Fig. 3a: eine Seitenansicht eines dritten Ausführungsbeispiels einer Schraube mit Hülse;
- Fig. 3b: eine Ansicht der Hülse aus Fig. 3a von unten;
- Fig. 4a: eine Seitenansicht eines vierten Ausführungsbeispiels einer Schraube mit Hülse;
- Fig. 4b: eine Ansicht der Hülse aus Fig. 4a von unten;
- Fig. 5a: eine Seitenansicht eines fünften Ausführungsbeispiels einer Schraube mit Hülse;
- Fig. 5b: eine Ansicht der Hülse aus Fig. 5a von unten;
- Fig. 6: eine Seitenansicht eines Ausführungsbeispiels einer Schraube mit Hülse ohne eingeprägten Vorsprung an der Hülse;
- Fig. 7: eine Seitenansicht eines weiteren Ausführungsbeispiels einer Schraube mit Hülse ohne eingeprägten Vorsprung an der Hülse;
- Fig. 8: eine Seitenansicht eines noch weiteren Ausführungsbeispiels einer Schraube mit Hülse ohne eingeprägten Vorsprung an der Hülse.

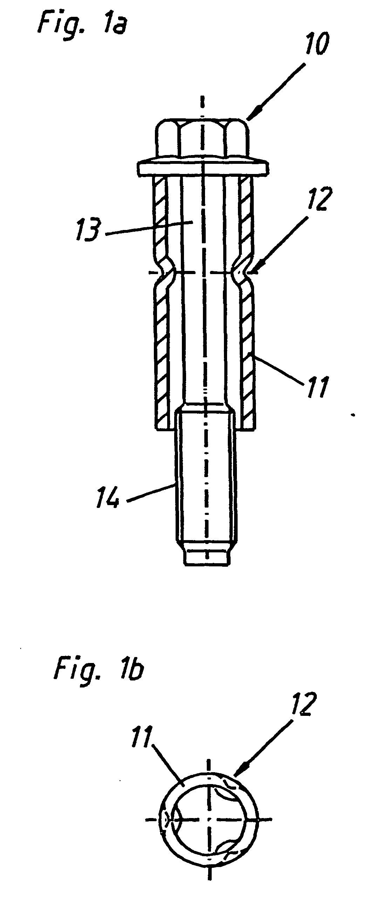

Fig. 1a zeigt eine Schraube 10 mit einer Hülse 11. Die Hülse 11 weist drei Einprägungen 12 auf, wie Fig. 1b zeigt, sodass die Hülse an der Stelle der Einprägung 12 eine Engstelle besitzt. Die Schraube 10 hat einen Schaft 13, dessen Außendurchmesser kleiner ist als der Außendurchmesser eines Gewindes 14. Der Außendurchmesser des Gewindes 14 ist wiederum größer als der Innendurchmesser der Hülse an der Engstelle im Bereich der Einprägung 12. Somit kann die Hülse 11 nicht von der Schraube 10 herunterrutschen. Um die Hülse 11 jedoch auf die Schraube 10 aufstecken zu können, kann die Vornahme der Einprägungen 12 erst nach dem Aufstecken der Hülse 11 auf die Schraube 10 erfolgen. Alternativ kann die Einprägung 12 im ungewickelten Zustand in einen Blechstanzling eingeprägt werden. Anschließend wird der Blechstanzling auf die Schraube 10 gewickelt.

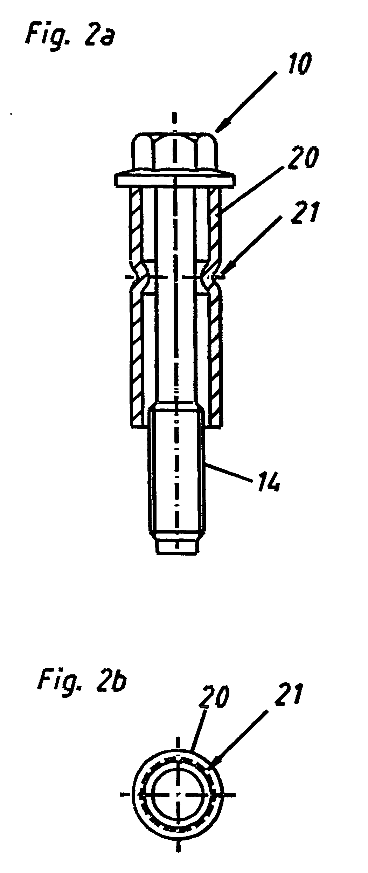

Fig. 2a zeigt die Schraube 10 aus Fig. 1a, 1b, über die eine Hülse 20 gestülpt ist. Die Hülse 20 weist einen radial nach innen umlaufenden Wulst 21 auf. Die Hülse 20 hat im Bereich der durch den umlaufenden Wulst 21 bedingten Engstelle einen geringeren Durchmesser als der Außendurchmesser des Gewindes 14 der Schraube 10. Somit ist die Hülse auch bei dieser Ausführungsform verliersicher mit der Schraube 10 verbunden. Fig. 2b zeigt die Hülse 20 und, als gestrichelte Linie dargestellt, die Einprägung 21.

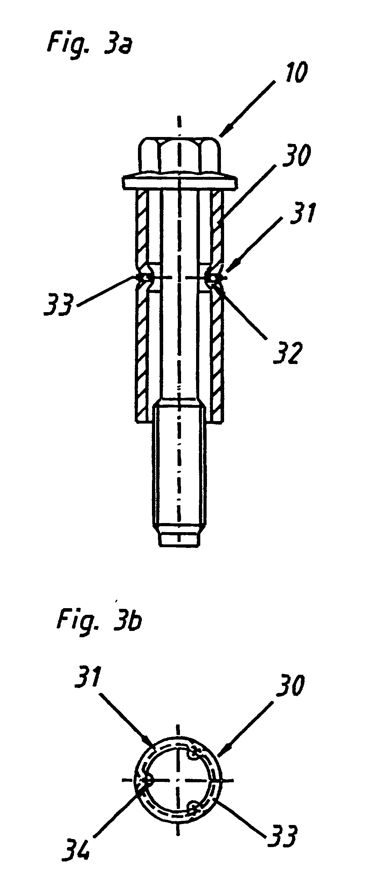

Fig. 3a zeigt die mit einer weiteren Ausführungsform einer Hülse 30 verbundene Schraube 10. Die Hülse 30 weist im Bereich einer umlaufenden Einprägung 31 drei Durchbrüche 32 auf (Fig. 3b), in die ein Federelement 33 mit Nasen 34 einschnappen kann. Dabei wird das Federelement 33 von außen über die Hülse 30 geschoben, bis es im Bereich der Einprägung 31 mit seinen Nasen 34 in die öffnungen 32 einschnappt. Es ist jedoch auch denkbar, dass ein hier nicht näher dargestelltes Federelement von innen in die Hülse eingeführt wird, bis es im Bereich der Einprägungen 31 in die Durchbrüche 32 einschnappt und somit die Hülse 30 mit der Schraube unverlierbar verbindet. Fig. 3b zeigt die Hülse 30, die als gestrichelte Linie dargestellte Einprägung 31 und das Federelement 33 und seine Nasen 34.

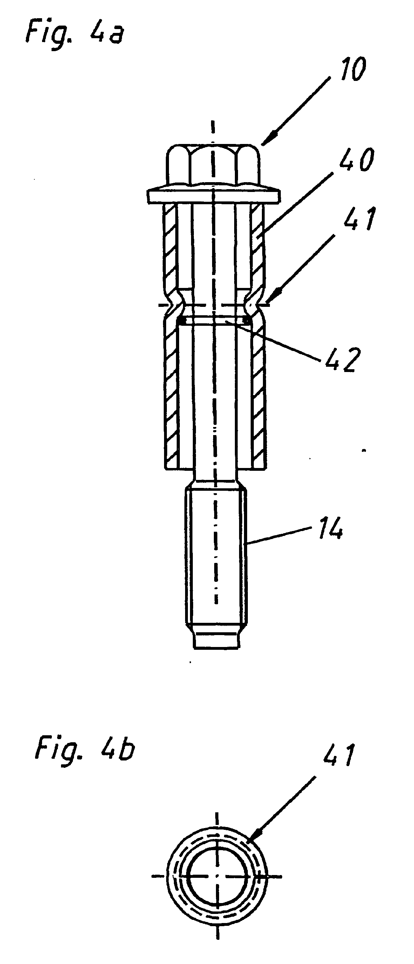

Fig. 4a zeigt die Schraube 10, die durch eine Hülse 40 (Fig. 4b) gesteckt ist. Die Hülse 40 weist eine umlaufende Einprägung 41 (Fig. 4b) auf, die einen Anschlag für ein Ringelement 42 bildet. Der Innendurchmesser des Ringelements 42 ist kleiner als der Außendurchmesser des Gewindes 14 der Schraube 10. Somit ist die Hülse 40 mit der Schraube 10 unverlierbar verbunden.

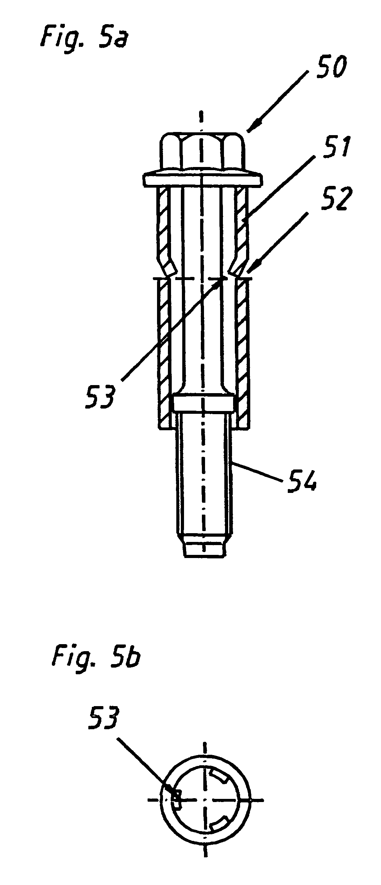

Fig. 5a zeigt eine anders als die Schraube 10 gestaltete Schraube 50, die durch eine Hülse 51 gesteckt ist. Die Hülse 51 weist eine Durchstoßung 52 auf, sodass nach innen vorstehende Ränder 53 (Fig. 5b) gebildet werden. Die Ränder 53 bilden somit eine Engstelle, die kleiner ist als der Außendurchmesser des Gewindes 54 der Schraube 50. Vorteilhaft bei dieser Ausführung ist es, dass die Durchstoßung 52 schon vor der Montage der Hülse 51 mit der Schraube 50 angebracht werden kann. Beim Montieren der Hülse 51 auf die Schraube 50 werden die vorzugsweise federelastischen, nach innen vorstehenden Ränder 53 nach außen gedrückt, bis das Gewinde 54 vollständig über die nach innen stehenden Ränder 53 geschoben ist. Dann wirken die nach innen vorstehenden Ränder 53 wie Widerhaken und verhindern ein Herausrutschen der Schraube 50 aus der Hülse 51.

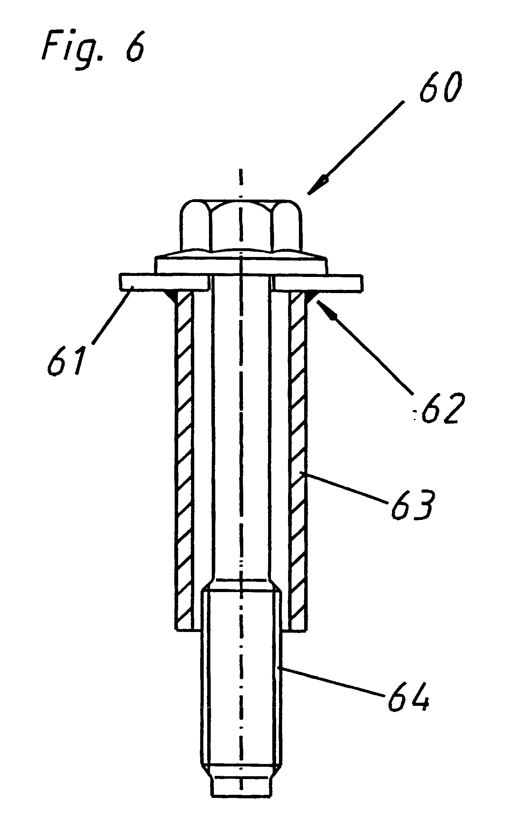

Fig. 6 zeigt eine Schraube 60 mit einer unverlierbaren Unterlagscheibe 61. An der Unterlagscheibe 61, deren Innendurchmesser kleiner als der Außendurchmesser des Gewindes 64 der Schraube 60 ist, ist eine Hülse 63 beispielsweise durch eine Klebe-, Schweiß- oder Lötverbindung 62 befestigt. Die Unterlagscheibe 61 und die Hülse 63 können auch geschlitzt sein.

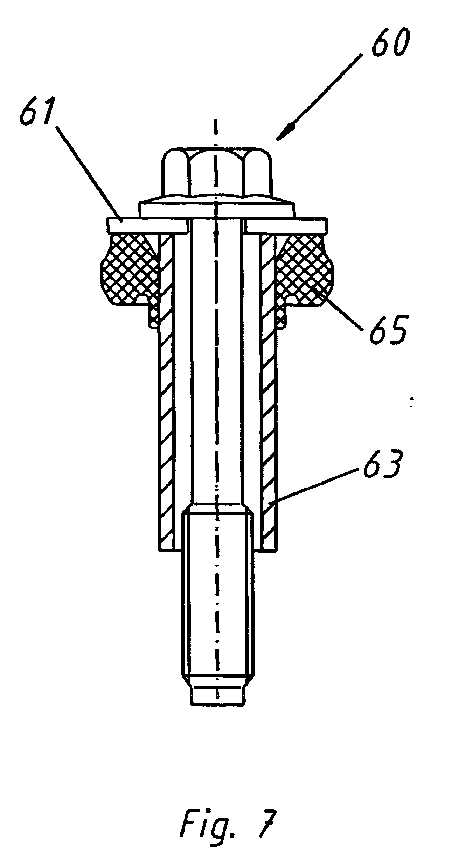

Fig. 7 zeigt wieder die Schraube 60 mit unverlierbarer Unterlagscheibe 61. Die Hülse 63 ist hier jedoch indirekt und zwar über ein Element 65 aus einem Elastomer mit der Unterlagscheibe 61 verbunden. Das Element 65 ist dabei an die Unterlagscheibe 61 beispielsweise angeklebt oder anvulkanisiert. Die Verbindung zwischen Hülse 63 und Element 65 entsteht durch Reibschluss des unter Vorspannung über die Hülse 63 gezogenen Elements 65.

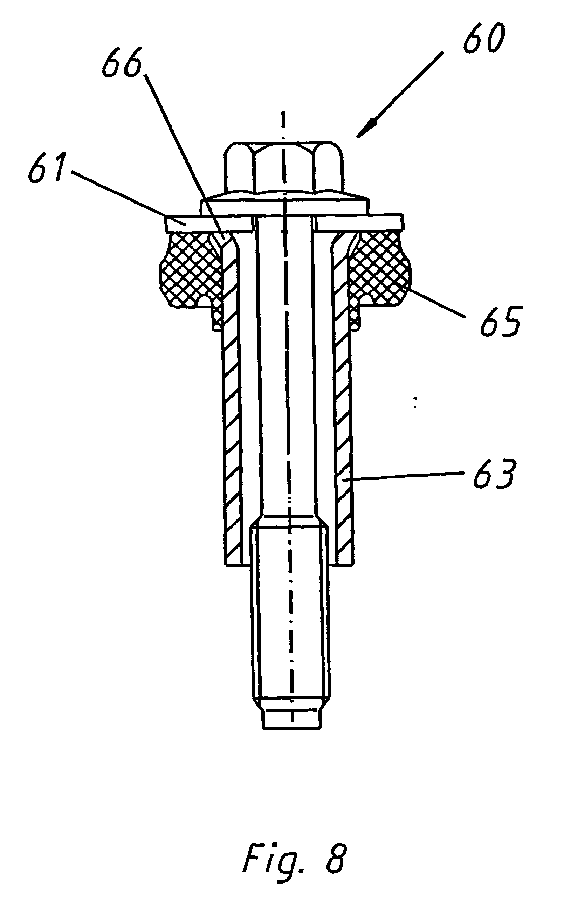

Fig. 8 zeigt eine ganz ähnliche Konstruktion wie Fig. 7. Hier ist allerdings das Element 65' lose über die Hülse 63' gezogen. Die Verbindung zwischen Hülse 63' und Element 65' entsteht hir durch einen aufgeweiteten oberen Rand 66 der Hülse 63', der verhindert, dass die Hülse 63' aus dem Element 65' nach unten fallen kann.

## Patentansprüche

1. Schraube (10, 50, 60) mit Hülse (11, 20, 30, 40, 51, 63), wobei ein gewindeloser Bereich des Schraubenschafts (13) einen kleineren Durchmesser als der Außendurchmesser eines Gewindebereichs (14, 54, 64) der Schraube (10, 50) aufweist und die Hülse (11, 20, 30, 40, 51, 63) auf der Innenseite eine Engstelle aufweist, deren Durchmesser kleiner als der Außendurchmesser des Gewindebereichs (14, 54, 64) der Schraube (10, 50, 60) ist, und wobei diese Engstelle durch mindestens einen radial von außen nach innen eingeprägten Vorsprung (12) gebildet ist, so dass die Hülse (11, 20, 30, 40, 51, 63) unverlierbar an der Schraube (10, 50, 60) angebracht ist, **dadurch gekennzeichnet, dass** die Hülse (11, 20, 30, 40, 51, 63) einen Schlitz aufweist, und dass die Hülse (11, 20, 30, 40, 51, 63) außerhalb der Engstelle über ihre gesamte Länge eine kreiszylindrische Form mit konstantem Innen- und Außendurchmesser aufweist.

2. Schraube (10, 50) mit Hülse (11, 20, 51) nach Anspruch 1, **dadurch gekennzeichnet, dass** der Vorsprung (11, 21)ein umlaufender Wulst ist.

3. Schraube (10, 50) mit Hülse (11, 20, 30, 40, 51) nach Anspruch 1, **dadurch gekennzeichnet, dass** der mindestens eine Vorsprung (11, 21) von den nach innen vorstehenden Rändern (53) einer Durchstoßung (52) eines Hülsenmantels gebildet ist.

4. Schraube (10, 50) mit Hülse (11, 20, 30, 40, 51) nach Anspruch 1, **dadurch gekennzeichnet, dass** in einen Hülsenmantel Löcher (32) eingebracht sind, in die Vorsprünge eines Federelements (33) von außen einschnappbar sind, um die Engstelle zu bilden.

5. Schraube (10, 50) mit Hülse (11, 20, 30, 40, 51) nach Anspruch 1, **dadurch gekennzeichnet, dass** die Engstelle von einem Ringelement (42) gebildet ist, das an einem Anschlag (41) an der Innenseite der. Hülse (11, 20, 30, 40, 51) anliegt.

6. Schraube (10, 50) mit Hülse (11, 20, 30, 40, 51) nach einem der Ansprüche 1 bis 5, **dadurch gekennzeichnet, dass** die Hülse (11, 20, 30, 40, 51) aus einem Materialstreifen gewickelt ist.

7. Schraube (10, 50) mit Hülse (11, 20, 30, 40, 51) nach einem der Ansprüche 1 bis 6, **dadurch gekennzeichnet, dass** die Hülse (11, 20, 30, 40, 51) aus Metall, Kunststoff oder Gummi gefertigt ist.

## Claims

1. Screw (10, 50, 60) with a sleeve (11, 20, 30, 40, 51, 63), whereby a thread-less section of the screw shaft (13) comprises a smaller diameter then the outside diameter of a threaded section (14, 54, 64) of the screw (10, 50), and the sleeve (11, 20, 30, 40, 51, 63) comprises a narrowing on the inside, the diameter of which is smaller than the outside diameter of the threaded section (14, 54, 64) of the screw (10, 50, 60) and whereby this narrowing is formed by at least one projection (12) embossed from the outside towards the inside, so that the sleeve (11, 20, 30, 40, 51, 63) is affixed to the screw (10, 50, 60) and cannot be lost, **characterised in that** the sleeve (11, 20, 30, 40, 51, 63) comprises a slit, and **in that** the sleeve (11, 20, 30, 40, 51, 63) is of a circular cylindrical shape with a constant inside and outside diameter outside of the narrowing across it's entire length.

2. Screw (10, 50) with a sleeve (11, 20, 51) according to Claim 1, **characterised in that** the projection (11, 21) consists of a circumferential bead.

3. Screw (10, 50) with a sleeve (11, 20, 30, 40, 51) according to Claim 1, **characterised in that** the at least one projection (11, 21) is formed by the inwardly projecting edges (53) of a through opening (52) in a sleeve jacket.

4. Screw (10, 50) with a sleeve (11, 20, 30, 40, 51) according to Claim 1, **characterised in that** holes (32) are inserted in a sleeve jacket, into which the projections of a spring element (33) can be snapped from the outside in order to form the narrowing.

5. Screw (10, 50) with a sleeve (11, 20, 30, 40, 51) according to Claim 1, **characterised in that** the narrowing is formed by an annular element (42) which abuts against a shoulder (41) on the inside of the sleeve (11, 20, 30, 40, 51).

6. Screw (10, 50) with a sleeve (11, 20, 30, 40, 51) according to one of the Claims 1 to 5, **characterised in that** the sleeve (11, 20, 30, 40, 51) is wound with a material strip.

7. Screw (10, 50) with a sleeve (11, 20, 30, 40, 51) according to one of the Claims 1 to 6, **characterised in that** the sleeve (11, 20, 30, 40, 51) is made of metal, plastic, or rubber.

## Revendications

1. Vis (10, 50, 60) pourvue d'une douille (11, 20, 30, 40, 51, 63), sachant qu'une région non filetée du corps (13) de la vis possède un plus petit diamètre que le diamètre extérieur d'une région (14, 54, 64) filetée de la vis (10, 50) et que la douille (11, 20, 30, 40, 51, 63) possède sur sa surface intérieure un passage resserré dont le diamètre est inférieur au diamètre extérieur de la région (14, 54, 64) filetée de la vis (10, 50, 60), et sachant que ce passage resserré est formé par au moins une saillie (12) imprimée radialement de l'extérieur vers l'intérieur, de sorte que la douille (11, 20, 30, 40, 51, 63) est montée de manière imperdable sur la vis (10, 50, 60), **caractérisée en ce que** la douille (11, 20, 30, 40, 51, 63) possède une fente, et **en ce que** la douille (11, 20, 30, 40, 51, 63), en dehors du passage resserré, possède sur toute sa longueur une forme cylindrique circulaire ayant un diamètre intérieur et un diamètre extérieur constants.

2. Vis (10, 50) pourvue d'une douille (11, 20, 51) suivant la revendication 1, **caractérisée en ce que** la saillie (12, 21) est un bourrelet faisant le tour.

3. Vis (10, 50) pourvue d'une douille (11, 20, 30, 40, 51) suivant la revendication 1, **caractérisée en ce que** la au moins une saillie (12, 21) est formée par les bords (53) saillants vers l'intérieur d'un percement (52) d'une surface latérale de la douille.

4. Vis (10, 50) pourvue d'une douille (11, 20, 30, 40, 51) suivant la revendication 1, **caractérisée en ce que** des orifices (32) sont ménagés dans une surface latérale de la douille, dans lesquels des saillies d'un élément (33) formant ressort peuvent être encliquetées de l'extérieur pour former le passage resserré.

5. Vis (10, 50) pourvue d'une douille (11, 20, 30, 40, 51) suivant la revendication 1, **caractérisée en ce que** le passage resserré est formé par un élément (42) annulaire qui s'applique contre une butée (41) sur la surface intérieure de la douille (11, 20, 30, 40, 51).

6. Vis (10, 50) pourvue d'une douille (11, 20, 30, 40, 51) suivant l'une des revendications 1 à 5, **caractérisée en ce que** la douille (11, 20, 30, 40, 51) est enroulée à partir d'une bande de matériau.

7. Vis (10, 50) pourvue d'une douille (11, 20, 30, 40, 51) suivant l'une des revendications 1 à 6, **caractérisée en ce que** la douille (11, 20, 30, 40, 51) est fabriquée en métal, en matière plastique ou en caoutchouc.
